# EUROPÄISCHE PATENTSCHRIFT

(11) **EP 2 290 561 B1**
(45) Veröffentlichungstag und Bekanntmachung des Hinweises auf die Patenterteilung: **22.01.2014**
(21) Anmeldenummer: 09168532.1
(22) Anmeldetag: 24.08.2009
(51) Int. Cl.: G06F 17/30

(54) **Verfahren und Einrichtung zum Speichern und Wiederherstellen von elektronischen Dokumenten und Datenbanken**
Method and device for saving and restoring electronic documents and databases
Procédé et dispositif de stockage et de reproduction de documents électroniques et de banques de données

(43) Veröffentlichungstag der Anmeldung: 02.03.2011
(73) Patentinhaber: BRAINCO AG, 4573 Lohn-Ammannsegg SO (CH)
(72) Erfinder:
(74) Vertreter: Schneider, Günther Martin

(56) Entgegenhaltungen:
- US-A1- 2004 230 966
- US-A1- 2006 259 516
- US-B1- 6 657 661

## Beschreibung

Die Erfindung betrifft ein Computer-implementiertes Verfahren zum Speichern von elektronischen Dokumenten, so dass die elektronischen Dokumente und die ein elektronisches Dokument beschreibenden Attribute wiederherstellbar sind. Des Weiteren betrifft die Erfindung ein Computer-implementiertes Verfahren zum Wiederherstellen bzw. Herstellen einer Datenbank aus einer Anzahl von elektronischen Dokumenten. Zudem wird durch die Erfindung eine Einrichtung zum Speichern von elektronischen Dokumenten bereitgestellt, welche ausgestaltet ist, elektronische Dokumente und die ein elektronisches Dokument beschreibenden Attribute wieder herzustellen. Unter einem elektronischen Dokument wird jede Art von elektronisch speicherbaren Dateien verstanden.

### TECHNISCHER HINTERGRUND DER ERFINDUNG UND

### STAND DER TECHNIK

Zum Speichern und/oder Archivieren von elektronischen Dokumenten ist es bekannt, sog. Dokumenten-Management-Systeme einzusetzen, mit welchen eine sehr große Anzahl von elektronischen Dokumenten unterschiedlichen Typs und unterschiedlicher Größe effizient und einfach verwaltet werden können. Solche Dokumenten-Management-Systeme verwenden zur Speicherung der elektronischen Dokumente und der dazugehörigen Metainformationen sog. Datenbank-Systeme. Ein Datenbank-System umfasst ein Datenbank-Management-System und eine oder mehrere Datenbanken. Das Datenbank-Management-System regelt die Zugriffe auf die Datenbanken, während in den Datenbanken die Nutzdaten gespeichert werden. Metainformationen elektronischer Dokumente werden üblicherweise als Nutzdaten in den Datenbanken gespeichert.

Es ist bekannt, elektronische Dokumente außerhalb der Datenbank, etwa in einem Dateisystem zu speichern. Die Speicherung der elektronischen Dokumente außerhalb der Datenbank kann dabei durch das Datenbank-Management-System oder durch das Dokumenten-Management-System verwaltet werden. Zur Speicherung der elektronischen Dokumente außerhalb der Datenbank ist es bekannt, für jedes zu speichernde elektronisches Dokument einen Dateinamen zu erzeugen mit dem das Dokument gespeichert wird. Der Dateiname wird als Teil der zu dem elektronischen Dokument gehörenden Metainformationen in der Datenbank gespeichert, um eine Verbindung zwischen den Metainformation und dem gespeicherten Dokument herzustellen. Das Erzeugen eines Dateinamens wird üblicherweise von dem Dokumenten-Management-System durchgeführt, kann aber auch von dem Datenbank-Management-System übernommen werden. Als Dateinamen werden zufällig erzeugte Zeichenketten oder Zeichenfolgen mit einer fortlaufenden Nummerierung verwendet.

Für den Zweck der Verbindung zwischen den Metainformationen in der Datenbank und den elektronischen Dokumenten außerhalb der Datenbank sind zufällig erzeugten Zeichenketten als Dateinamen ausreichend, da der Zugriff auf die elektronischen Dokumente ausschließlich über das Dokumenten-Management-System und/oder über das Datenbank-Management-System erfolgt.

Die aus dem Stand der Technik bekannte Form der Speicherung von elektronischen Dokumenten hat aber den Nachteil, dass bei einem Ausfall des Dokumenten-Management-Systems bzw. des Datenbank-Management-Systems auch der Zugriff auf die elektronischen Dokumente nahezu unmöglich wird. Ein weiterer Nachteil besteht darin, dass die Datenbank, in welcher die Metainformationen zu den elektronischen Dokumenten gespeichert sind, anhand der elektronischen Dokumente nicht wiederherstellbar ist, ohne hierfür den Inhalt eines jeden Dokuments zu analysieren. Um die Herstellung der Datenbank zu gewährleisten, werden aufwändige Datenbank-Sicherungsverfahren eingesetzt, um die Datenbank unabhängig von den elektronischen Dokumenten wiederherstellen zu können.

Ein weiterer Nachteil besteht darin, dass ohne das Dokumenten-Management-System bzw. ohne das Datenbank-Management-System eine Dokumentenrecherche nicht möglich ist. Um ein bestimmtes Dokument zu finden, müsste der Inhalt sämtlicher Dokumente analysiert werden, bis das gesuchte Dokument gefunden wird.

Aus der US 2004/0230966 A1 ist ein Verfahren und eine Vorrichtung zum Erzeugen von Namen für Dateien, welche von einem Computer auf einen Server geladen werden, bekannt. Für das Erzeugen der Namen werden Metadaten der Dateien herangezogen. Der erzeugte Name wird der Datei zugeordnet.

Die US 6,657,661 B1 beschreibt eine Digital-Kamera, welche ein GPS-System verwendet, um für die mit der Digital-Kamera aufgenommenen Digitalbilder Dateinamen zu erzeugen, welche Lokationsinformationen zu dem aufgenommen Bild enthalten.

Aus der US 2006/0259516 A1 ist ein Verfahren bekannt geworden, bei dem die Dateinamen bereits existierender Dateien verändert werden, indem der ursprüngliche Dateiname um Metainformationen ergänzt wird. Der so erzeugte Dateiname wird anschließend um die ursprüngliche Dateiendung ergänzt.

### AUFGABE DER ERFINDUNG

Aufgabe der Erfindung ist es daher, ein Verfahren bereitzustellen, wobei die Metainformationen der elektronischen Dokumente im Falle eines Datenbank- bzw. Hardware-Fehlers herstellbar bzw. wiederherstellbar sind.

### ERFINDUNGSGEMÄßE LÖSUNG

Gelöst wird diese Aufgabe durch ein Verfahren zum Herstellen oder Wiederherstellen einer Datenbank aus einer Anzahl von elektronischen Dokumenten sowie ein Computerprogrammprodukt nach den unabhängigen Ansprüchen. Vorteilhafte Ausgestaltungen der Erfindung sind in den abhängigen Ansprüchen angegeben. Bereit gestellt wird demnach ein Verfahren zum Herstellen oder Wiederherstellen einer Datenbank, in welcher Ausprägungen von Metainformationen von elektronischen Dokumenten speicherbar sind, aus einer Anzahl von elektronischen Dokumenten, welche jeweils mit einem Dateinamen in einer ersten Speichereinrichtung gespeichert sind, wobei für jedes elektronische Dokument eine Anzahl von Zeichenfolgen erzeugt wurden, wobei jede Zeichenfolge eine Ausprägung einer vorbestimmten Metainformation des jeweiligen elektronischen Dokuments umfasst und wobei für jedes elektronische Dokument aus den erzeugten Zeichenfolgen ein Dateiname gebildet wurde, indem die erzeugten Zeichenfolgen in einer vorbestimmten Reihenfolge zu einem Dateinamen zusammengefügt wurden, und wobei das Verfahren
- für jedes elektronische Dokument aus dem Dateinamen eine Anzahl von Zeichenfolgen ermittelt, wobei zumindest eine Zeichenfolge der jeweils ermittelten Zeichenfolgen eine Ausprägung einer vorbestimmten Metainformation des jeweiligen elektronischen Dokuments umfassen,
- in der Datenbank für jedes elektronische Dokument ein Datensatz erzeugt und speichert, wobei der gespeicherte Datensatz Attributswerte und/oder Referenzen zu Attributswerten aufweist, wobei zumindest ein Attributswert zumindest eine für das jeweilige elektronische Dokument ermittelte Zeichenfolge umfasst, und
- die Datenbank in einer zweiten Speichereinrichtung speichert.

Die erste Speichereinrichtung und die zweite Speichereinrichtung können zwei physikalisch voneinander getrennte Speichermedien sein.

Die erste Speichereinrichtung kann ein Dateisystem mit einer hierarchischen Ordnerstruktur umfassen, in welcher die elektronischen Dokumente gespeichert sind, wobei für jedes elektronische Dokument aus zumindest einem Ordnernamen der Ordnerstruktur eine Anzahl von Zeichenfolgen ermittelt wird, wobei zumindest eine Zeichenfolge der jeweils ermittelten Zeichenfolgen eine Ausprägung einer vorbestimmten Metainformation des jeweiligen elektronischen Dokuments umfasst. Damit können Metainformationen zu elektronischen Dokumenten auch aus dem Ordnernamen wiederhergestellt und in der Datenbank gespeichert werden.

Jede Zeichenfolge des jeweiligen Dateinamens und/oder des jeweiligen Ordnernamens kann Zeichen aus jeweils genau einer Zeichenmenge aufweisen, welche jeweils aus einer Anzahl von zueinander disjunkten Zeichenmengen ausgewählt ist, wobei jeweils zwei aufeinander folgende Zeichenfolgen in dem Dateinamen und/oder in dem Ordnernamen Zeichen aus jeweils zwei der zueinander disjunkten Zeichenmengen aufweisen. Damit können die Zeichenfolgen alleine unter Zuhilfenahme der Zeichenmengen aus den Dateinamen bzw. aus den Ordnernamen extrahiert werden.

Jede Zeichenfolge des jeweiligen Dateinamens und/oder des jeweiligen Ordnemamens kann jeweils eine vorbestimmte Anzahl von Zeichen aufweisen. Damit kann der Dateiname bzw. der Ordername anhand der Längeninformation der Zeichenfolgen in seine einzelnen Bestandteile zerlegt werden. Die Längeninformation der Zeichenfolgen kann als Bestandteil des Dateinamens gespeichert werden. Damit kann ein Dateiname besonders effizient in seine Bestandteile zerlegt werden.

Schließlich umfasst die Erfindung ein Computerprogrammprodukt mit Programmcode, welcher, wenn in eine Datenverarbeitungsanlage geladen, das Verfahren gemäß der Erfindung zur Ausführung bringt.

### KURZBESCHREIBUNG DER FIGUREN

Die Erfindung wird nachfolgend anhand eines vorteilhaften Ausführungsbeispiels zusammen mit der Zeichnung näher beschrieben. In der Zeichnung zeigt
- Fig. 1: einen Überblick über das erfindungsgemäße Verfahren sowie eine vorteilhafte Computer- bzw. Netzwerkarchitektur zum Abspeichern eines elektronischen Dokuments und zur Wiederherstellung eines abgespeicherten elektronischen Dokuments;
- Fig. 2: einen Überblick über das Verfahren zum Speichern eines elektronischen Dokuments, wobei die Art und Weise, wie ein Dokument auf einem physikalischen Datenträger abgelegt wird, um es wiederherstellen zu können, näher beschrieben wird;
- Fig. 3: ein Ablaufdiagramm des erfindungsgemäßen Verfahrens zum Speichern eines elektronischen Dokuments; und
- Fig. 4: ein Ablaufdiagramm des erfindungsgemäßen Verfahrens zum Herstellen oder Wiederherstellen einer Datenbank aus einer Anzahl von elektronischen Dokumenten.

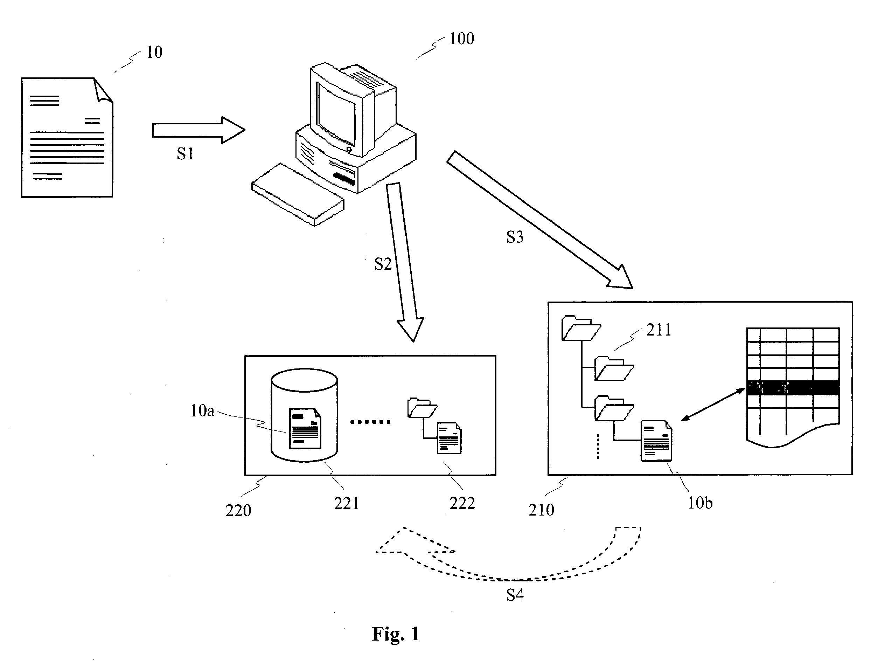

**Fig. 1** zeigt eine vorteilhafte Architektur eines Computersystems bzw. eines Computernetzwerks zum Speichern von elektronischen Dokumenten, derart, dass die Metainformationen der gespeicherten elektronischen Dokumente und/oder die elektronischen Dokumente wieder herstellbar sind.

In einem ersten Schritt S1 wird ein elektronisches Dokument 10 oder eine elektronische Datei an ein Computersystem 100 übergeben. Das Computersystem 100 kann auch ein Server oder ein Verbund aus Servern, etwa eine Serverfarm sein. Die Übergabe des elektronischen Dokuments 10 an das Computersystem 100 kann auf vielfältige Art und Weise erfolgen. So kann beispielsweise das elektronische Dokument 10 mittels E-Mail, über sonstige Datenübertragungsprotokolle, wie etwa FTP, oder durch Einlesen des elektronischen Dokuments 10 von einem tragbaren Speichermedium, beispielsweise einer CD-ROM oder einem USB-Stick, erfolgen. Es können gleichzeitig mehrere elektronische Dokumente 10 an das Computersystem 100 übergeben werden.

Das Computersystem 100 ist ausgestaltet, das übergebene elektronische Dokument 10 zu registrieren, d.h. dem elektronischen Dokument 10 eine Anzahl von Metainformationen bzw. Ausprägungen von Metainformationen zuzuweisen, welche beispielsweise die Art des Dokuments oder den Inhalt des elektronischen Dokuments beschreiben bzw. registrieren.

Die Registrierung kann unter Zuhilfenahme von an sich aus dem Stand der Technik bekannten Verfahren geschehen. So sind beispielsweise Registrierungsverfahren bekannt, welche aus einer eingescannten Rechnung automatisch den Absender, das Rechnungsdatum, den Rechnungsbetrag etc. extrahieren können. Ein weiteres bekanntes Registrierungsverfahren wäre beispielsweise die Extraktion von Angebotsdaten aus einem elektronischen Angebotsdokument. Nicht automatisch registrierbare elektronische Dokumente können auch manuell registriert werden.

Die so zu einem elektronischen Dokument 10 gewonnenen Metainformationen werden in einem zweiten Schritt S2 in einer zweiten Speichereinrichtung 220 abgelegt. Die zweite Speichereinrichtung 220 kann eine Datenbank 221 aufweisen, in welcher das elektronische Dokument 10 beispielsweise in Form eines BLOB 10a abgespeichert wird. In der Datenbank 221 werden auch die zu dem elektronischen Dokument 10a gehörenden Metainformationen abgelegt.

Alternativ zur Ablage des elektronischen Dokuments 10 direkt in der Datenbank 221 kann das elektronische Dokument 10 auch in einem Dateisystem 222 abgelegt werden. In der Datenbank 221 wird dann eine Referenz zu dem in dem Dateisystem 222 abgelegten elektronischen Dokument 10 gespeichert. Die Referenz auf das elektronische Dokument 10 im Dateisystem kann auf unterschiedliche Art und Weise realisiert werden. Beispielsweise kann die Referenz aus der Angabe des Speicherorts und eines Dateinamens bestehen.

Die zweite Speichereinrichtung 220 kann dabei aus mehreren physikalischen Speichermedien bestehen, wobei die Datendateien der Datenbank 221 auf Speichermedien abgelegt werden können, welche verschieden von den Speichermedien sind, auf denen sich das Dateisystem bzw. die abgelegten elektronischen Dokumente 10 befinden. Die Verwaltung der in der Datenbank abgelegten Metainformationen sowie die Verwaltung der in der Datenbank abgespeicherten BLOBs bzw. der in dem Dateisystem abgelegten elektronischen Dokumente 10 kann hierbei einem Datenbank-Management-System bzw. einem Dokumenten-Management-System überlassen werden.

In einem dritten Schritt S3 erzeugt das Computersystem 100 aus dem zuvor aus den elektronischen Dokumenten 10 gewonnenen Metainformationen eine Anzahl von Zeichenfolgen, aus denen dann ein Dateiname für das elektronische Dokument 10 gebildet wird. Nachdem der Dateiname gebildet worden ist, wird das elektronische Dokument 10 unter diesem Dateinamen als elektronisches Dokument 10b in einer ersten Speichereinrichtung 210 abgelegt.

Wichtig ist hierbei, dass die Speichereinrichtungen 210 und 220 so ausgewählt werden, dass im Falle eines Hardwareproblems der zweiten Speichereinrichtung 220 ein Zugriff auf die erste Speichereinrichtung 210 weiterhin gewährleistet ist, damit aus den elektronischen Dokumenten 10b in der ersten Speichereinrichtung die elektronischen Dokumente in der zweiten Speichereinrichtung und insbesondere die Metainformationen wiederhergestellt werden können.

Die erste Speichereinrichtung 210 kann von der zweiten Speichereinrichtung 220 physikalisch getrennt sein. So können die Speichereinrichtungen 210 und 220 zwei verschiedene Festplatten, zwei verschiedene RAID-Systeme oder auch zwei verschiedene sonstige für die Abspeicherung elektronischer Dokumente geeignete Speichermedien sein.

In einer Ausführungsform der Erfindung können die Speichereinrichtungen 210 und 220 auch durch einziges physikalisches Speichermedium gebildet werden, beispielsweise einer Festplatte mit zwei Partitionen, wobei in der ersten Partition die Dokumente 10b und in der zweiten Partition die Dokumente 10 gespeichert werden.

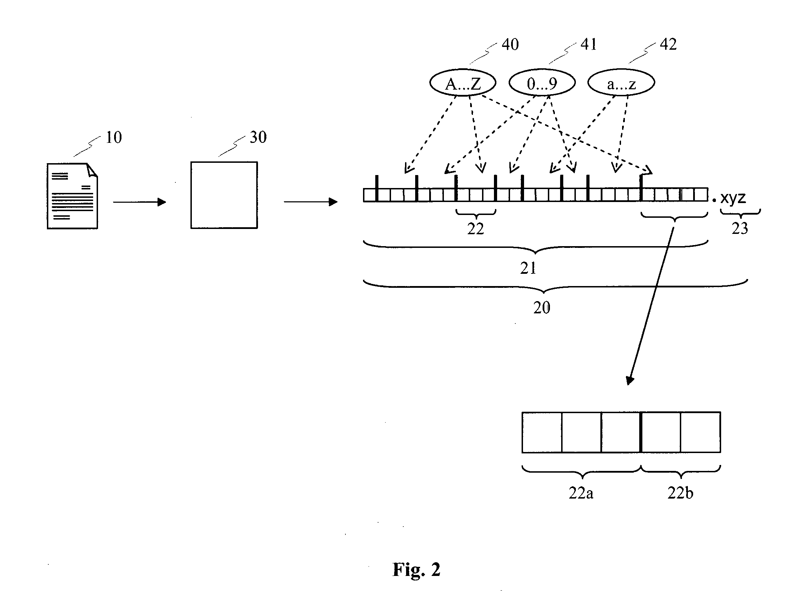

Das Erzeugen eines Dateinamens, unter welchem das elektronische Dokument 10 als elektronisches Dokument 10b in der ersten Speichereinrichtung 210 abgelegt wird, wird mit Bezug auf Fig. 2 näher erläutert.

Der für das elektronische Dokument 10 erzeugte Dateiname kann in einer Ausgestaltung der Erfindung so erzeugt werden, dass dieser eindeutig für die in der ersten Speichereinrichtung 210 abgelegten elektronischen Dokumente ist.

In einer zweiten Ausgestaltung der Erfindung können die elektronischen Dokumente 10b in der Speichereinrichtung 210 auch in einem hierarchischen Dateisystem 211 abgespeichert werden, wobei lediglich darauf zu achten ist, dass die Dateinamen der innerhalb einer Hierarchieebene abgelegten elektronischen Dokumente 10b eindeutig sind.

In einer noch weiteren Ausgestaltung der Erfindung können die aus dem elektronischen Dokument 10 gewonnenen Metainformationen auch dazu verwendet werden, um Zeichenfolgen für die Knotennamen der Knoten des hierarchischen Dateisystems zu erzeugen.

Aus den erzeugten Zeichenfolgen bzw. aus den daraus gebildeten Dateinamen für die elektronischen Dokumente 10b bzw. aus den daraus gebildeten Knotennamen des hierarchischen Dateisystems können eindeutige Rückschlüsse auf den Inhalt des Dokuments gezogen werden, so dass ein beschädigtes Dokument in der zweiten Speichereinrichtung 220 samt den zu dem elektronischen Dokument gehörenden Metainformationen aus dem elektronischen Dokument 10b bzw. aus dem Dateinamen des elektronischen Dokuments 10b wieder hergestellt werden kann.

In einer weiteren Ausgestaltung der Erfindung können die aus den elektronischen Dokumenten 10 gewonnenen Metainformationen ebenfalls in der ersten Speichereinrichtung 210 abgelegt werden. Diese in der ersten Speichereinrichtung 210 abgelegten Metainformationen können auf herkömmliche Art und Weise, beispielsweise in einer Datenbank oder auch in einer strukturierten Datei, beispielsweise einer XML-Datei, abgespeichert werden. Die so abgespeicherten Metainformationen können mit dem in der ersten Speichereinrichtung 210 abgelegten elektronischen Dokument 10b in Bezug gesetzt werden, so dass über das elektronische Dokument 10b eindeutig auf die zu dem elektronischen Dokument 10b gehörenden Daten zugegriffen werden kann.

Diese Metainformationen können in einer Ausführungsform der Erfindung auf zweifache Art und Weise verwendet werden:
1. Die Metainformationen können zur Wiederherstellung der zu einem Dokument gehörenden Metainformationen in der Datenbank 221 der zweiten Speichereinrichtung 220 verwendet werden;
2. Die Metainformationen können auch als lesbare und für den Benutzer interpretierbare Zeichenfolgen abgespeichert werden, was insbesondere dann vorteilhaft ist, wenn die Zeichenfolgen, aus denen der Dateiname des elektronischen Dokuments 10b erzeugt wurde, in codierter Form vorliegen, so dass sie für den Benutzer nicht mehr lesbar bzw. interpretierbar sind.

Dem Benutzer wird so die Möglichkeit gegeben, zu einem in der ersten Speichereinrichtung 210 abgelegten elektronischen Dokument 10b auch an die dazugehörigen Metainformationen zu gelangen. Die abgelegten Metainformationen können auch dazu verwendet werden, um nach elektronischen Dokumenten 10b innerhalb der ersten Speichereinrichtung 210 zu recherchieren, da die Metainformationen mit den abgespeicherten elektronischen Dokumenten in Bezug gebracht worden sind.

Fällt nun ein physikalisches Speichermedium der zweiten Speichereinrichtung 220 aus und sind auf diesem physikalischen Speichermedium elektronische Dokumente abgelegt, so können diese elektronischen Dokumente allein aufgrund ihres Dateinamens wiederhergestellt werden.

In einer Ausgestaltung der Erfindung können auch allein aufgrund des Dateinamens des elektronischen Dokuments 10b auch die zu diesem Dokument gehörenden Metainformationen in der Datenbank 221 wieder hergestellt werden. Sind die Metainformationen nicht allein aufgrund des Dateinamens wieder herstellbar, so kann zusätzlich auf die in der ersten Speichereinrichtung 210 abgelegten Metainformationen zugegriffen werden, und diese können entsprechend der wieder hergestellten elektronischen Dokumente in der zweiten Speichereinrichtung 220 in die Datenbank 221 übertragen werden. Die Wiederherstellung elektronischer Dokumente bzw. die dazugehörige Übertragung der Metainformationen von der ersten Speichereinrichtung 210 zur zweiten Speichereinrichtung 220 ist in Fig. 1 mit dem Bezugszeichen S4 gekennzeichnet.

Mit Bezug auf **Fig. 2** wird nun näher erläutert, wie für ein elektronisches Dokument 10 erfindungsgemäß ein Dateiname erzeugt wird, mit dem ein elektronisches Dokument samt seiner Metainformationen eindeutig wiederhergestellt werden kann.

In einer Verarbeitungseinrichtung 30, welche das Computersystem 100 aus Fig. 1 sein kann, werden zu dem elektronischen Dokument 10 Metainformationen ermittelt, aus denen dann ein Dateiname 20 erzeugt wird. Der Dateiname 20 besteht im Wesentlichen aus einem Präfix 21 gefolgt von einem Punkt und einem Postfix bzw. einer Datei-Endung 23. Im Folgenden wird der Präfix 21 des Dateinamens 20 zum besseren Verständnis allgemein als Dateiname bezeichnet. Erfindungsgemäß wird der Dateiname aus einer Anzahl von Zeichenfolgen 22 gebildet.

Jede Zeichenfolge kann eine Ausprägung einer Metainformation eines elektronischen Dokuments aufweisen. Die Zeichenfolgen werden in einer vorgegebenen Reihenfolge zu einem Dateinamen zusammengefügt, sodass die Metainformationen Bestandteil des Dateinamens sind.

Für jede zu bildende Zeichenfolge 22 können Zeichen aus einer bestimmten Zeichenmenge zur Verfügung stehen.

In Fig. 2 sind drei Zeichenmengen 40, 41, 42 dargestellt, nämlich eine erste Zeichenmenge 40 mit den Großbuchstaben von A - Z, eine zweite Zeichenmenge 41 mit den Ziffern 0 - 9 und eine dritte Zeichenmenge 42 mit den Kleinbuchstaben a - z. Andere oder zusätzliche Zeichenmengen mit anderen Zeichen oder Zeichenmengen aus einer Kombination der gezeigten Zeichenmengen 40, 41, 42 sind möglich.

Die Zeichenmengen sind hier so gebildet, dass sie zueinander disjunkt sind, vorzugsweise paarweise zueinander disjunkt sind. Zwei Zeichenmengen weisen also kein gemeinsames Zeichen auf.

Jede Zeichenfolge wird mit Zeichen aus jeweils genau einer Zeichenmenge gebildet. Das bedeutet, dass eine Zeichenfolge nur Zeichen aus z.B. der ersten Zeichenmenge 40 aufweist und eine weitere Zeichenfolge nur Zeichen aus z.B. der zweiten Zeichenmenge 41 aufweist. Eine dritte Zeichenfolge kann wiederum Zeichen aus der ersten Zeichenmenge 40 aufweisen.

Die Zeichenfolgen 22, welche jeweils aus Zeichen einer einzigen Zeichenmenge erzeugt worden sind, werden nun so hintereinander angeordnet (d.h. miteinander verkettet), dass keine zwei Zeichenfolgen aufeinander folgen, welche Zeichen aus der gleichen Zeichenmenge aufweisen. In Fig. 2 besteht beispielsweise die zweite Zeichenfolge nur aus Zeichen aus der Zeichenmenge A - Z, während die dritte Zeichenfolge nur aus Zeichen aus der Zeichenmenge 0 - 9 besteht.

Weil die Zeichenmengen (paarweise) zueinander disjunkt sind und weil keine zwei Zeichenfolgen aufeinander folgen, welche Zeichen aus der gleichen Zeichenmenge enthalten, kann der Dateiname beim Wiederherstellen eines elektronischen Dokuments bzw. der Metainformationen wieder in die einzelnen Bestandteile, nämlich in die einzelnen Zeichenfolgen, zerlegt werden. Hierfür muss dem Computer, welcher die Zerlegung der Dateinamen vornimmt, lediglich mitgeteilt werden, welche Zeichenmengen für die Zerlegung heranzuziehen sind.

Damit wird ein größtmögliches Maß an Flexibilität hinsichtlich der Erzeugung von Dateinamen gewährleistet, da die Zeichenfolgen für verschiedene Dateinamen unterschiedliche Längen aufweisen können. So kann etwa die erste Zeichenfolge des Dateinamens eines ersten elektronischen Dokuments zwei Zeichen aufweisen und die erste Zeichenfolge des Dateinamens eines zweiten elektronischen Dokuments fünf Zeichen.

Es kann auch festgelegt werden, dass das erste Zeichen einer Zeichenfolge immer ein Großbuchstabe oder immer eine Ziffer sein muss. Anhand dieses Kriteriums kann der aus den Zeichenfolgen zusammengesetzte Dateiname wieder in die einzelnen Zeichenfolgen zerlegt werden. Alternativ kann als erstes Zeichen einer Zeichenfolge immer ein Kleinbuchstabe vorgesehen sein.

Jede der erzeugten Zeichenfolgen kann eine zu einem elektronischen Dokument gehörende Metainformation repräsentieren. Beispielsweise kann die dritte Zeichenfolge mit dem Wert "123" das elektronische Dokument als Eingangsrechnung registrieren, während die dritte Zeichenfolge mit dem Wert "124" das elektronische Dokument als Ausgangsrechnung registrieren kann. Um diese beiden Werte auch für einen Benutzer interpretierbar zu machen, damit also der Benutzer auch erkennen kann, dass z.B. "124" Ausgangsrechnung bedeutet, können zu diesen Zeichenfolgen die entsprechenden dazugehörigen Metainformationen als Klartext in einer ersten Speichereinrichtung 210 abgelegt werden, wie es bereits mit Bezug auf Fig. 1 beschrieben worden ist.

Die Länge der einzelnen Zeichenfolgen bzw. die Gesamtlänge des Dateinamens ist nicht begrenzt. Dennoch sollte die Gesamtlänge des Dateinamens so gewählt werden, dass ein Austausch von elektronischen Dokumenten mit dem entsprechenden Dateinamen auch über Betriebssystemgrenzen hinweg gewährleistet ist. Der in Fig. 2 dargestellte Dateiname 21 besteht aus 26 Zeichen bzw. 10 Zeichenfolgen. Die zehn Zeichenfolgen können so zehn unterschiedliche Attribute, welche die Metainformationen repräsentieren, in dem Dateinamen repräsentieren. Für eine eindeutige Wiederherstellung eines elektronischen Dokuments und der entsprechenden Metainformationen sind zehn Zeichenfolgen in den meisten Fällen ausreichend. Sollten dennoch mehr Zeichenfolgen notwendig sein, kann der Dateiname erfindungsgemäß auch mehr Zeichenfolgen aufweisen. Ebenso können die Zeichenfolgen auch unterschiedliche Längen aufweisen.

In einer vorteilhaften Ausgestaltung der Erfindung ist die Länge der einzelnen Zeichenfolgen im Dateinamen bekannt. Zwei aufeinanderfolgende Zeichenfolgen können dann auch Zeichen aus derselben Zeichenmenge enthalten, weil die Zerlegung des Dateinamens anhand der Längeninformation für die Zeichenfolgen bewerkstelligt werden kann.

Zwei Zeichenfolgen mit Zeichen auch derselben Zeichenmenge können so beispielsweise auch dazu verwendet werden, um ein elektronisches Dokument mit einer eindeutigen Identifikation zu versehen. Gemäß Fig. 2 sind hierzu die beiden letzten Zeichenfolgen 22a und 22b vorgesehen. Zusammen weisen die beiden letzten Zeichenfolgen fünf Zeichen auf. Die Zeichenfolge 22a weist drei Zeichen, die Zeichenfolge 22b zwei Zeichen auf. Weil die Gesamtlänge der beiden Zeichenfolgen bzw. die Länge der beiden Zeichenfolgen 22a und 22b bekannt ist, können auch sämtliche Zeichen aus allen drei der hier gezeigten Zeichenmengen zum Erstellen der Zeichenfolgen 22a und 22b verwendet werden.

Die Zeichenfolge 22a kann beispielsweise dafür vorgesehen sein, eine eindeutige Identifikationsnummer zu repräsentieren, so dass mit einer dreistelligen Zeichenfolge 22a und den Zeichen aus den drei Zeichenmengen 40, 41, 42 ca. 238 000 unterschiedliche Identifikationsnummern erzeugt werden können. Sollten auch hier mehrere eindeutige Identifikationsnummern notwendig sein, kann die Zeichenfolge 22a entsprechend verlängert werden.

Die beiden letzten Zeichen des Dateinamens, d.h. die Zeichenfolge 22b, kann beispielsweise vorgesehen sein, eine Versionsnummer für das elektronische Dokument abzuspeichern. Auch hierbei können sämtliche Werte aus allen drei Zeichenmengen herangezogen werden, so dass insgesamt 3 844 Kombinationen für eine Versionierung zur Verfügung stehen.

In dem hier gezeigten Beispiel können also 238 328 unterschiedliche Dokumente eindeutig identifiziert werden, wobei für jedes Dokument zusätzlich 3 844 unterschiedliche Versionen abgespeichert werden können.

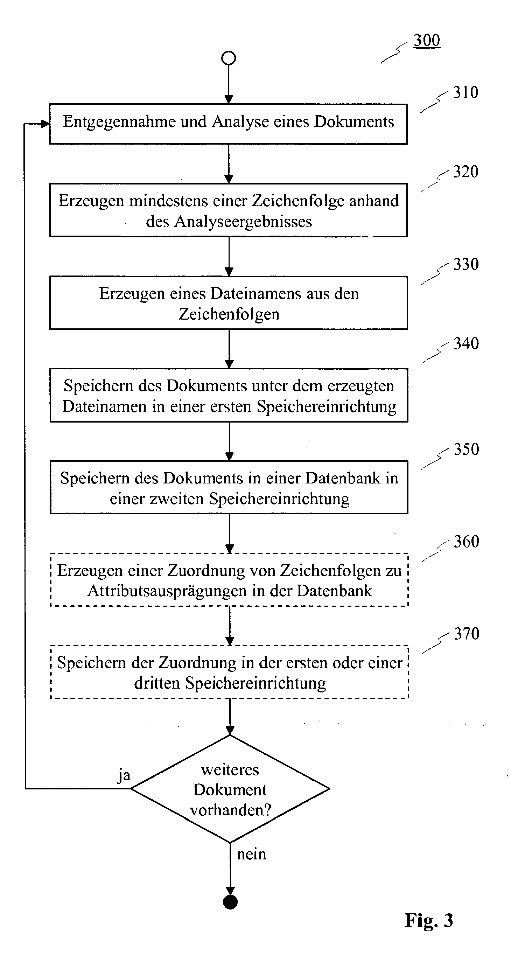

**Fig. 3** zeigt ein Ablaufdiagramm eines erfindungsgemäßen Verfahrens zum Speichern von elektronischen Dokumenten.

In einem ersten Schritt 310 des erfindungsgemäßen Verfahrens zum Speichern von elektronischen Dokumenten wird ein elektronisches Dokument entgegengenommen und einer Analyse unterzogen.

Anhand des Analyseergebnisses wird in einem zweiten Schritt 320 mindestens eine Zeichenfolge erzeugt, aus welcher in einem dritten Schritt 330 ein Dateiname gebildet wird.

Das elektronische Dokument wird im Anschluss daran in einem weiteren Schritt 340 unter dem erzeugten Dateinamen in einer ersten Speichereinrichtung gespeichert.

Gleichzeitig zum Schritt 340 oder nach dem Schritt 340 wird das elektronische Dokument in einem Schritt 350 in einer Datenbank in einer zweiten Speichereinrichtung abgelegt. Dieser Schritt kann als optionaler Schritt ausgeführt werden.

Die erste und die zweite Speichereinrichtung sind hierbei physikalisch voneinander getrennt, wobei allerdings das Computersystem 100 auf beide Speichereinrichtungen Zugriff hat. Der Zugriff auf die beiden Speichereinrichtungen kann über ein Kommunikationsnetzwerk, beispielsweise LAN, erfolgen.

In einem nächsten Schritt 360 werden die Zeichenfolgen in der Datenbank der zweiten Speichereinrichtung gespeichert. Die gespeicherten Zeichenfolgen sind hier Ausprägungen von Metainformation.

Die Ausprägungen werden im nächsten Schritt 370 in der ersten Speichereinrichtung gespeichert.

Das erfindungsgemäße Verfahren zum Speichern eines elektronischen Dokuments kann auch ohne die Schritte 360 und 370 ausgeführt werden, da die Metainformationen in einer Ausführungsform der Erfindung direkt aus dem Dateinamen des elektronischen Dokuments ableitbar sind.

Nachdem die Schritte 310 bis 350 bzw. bis 370 für ein elektronisches Dokument ausgeführt worden sind, kann geprüft werden, ob ein weiteres elektronisches Dokument vorhanden ist, welches gemäß der Erfindung abgespeichert werden soll. Ist dies der Fall, verzweigt das Verfahren in seinem Ablauf zum Schritt 310, während im anderen Fall das Verfahren beendet wird.

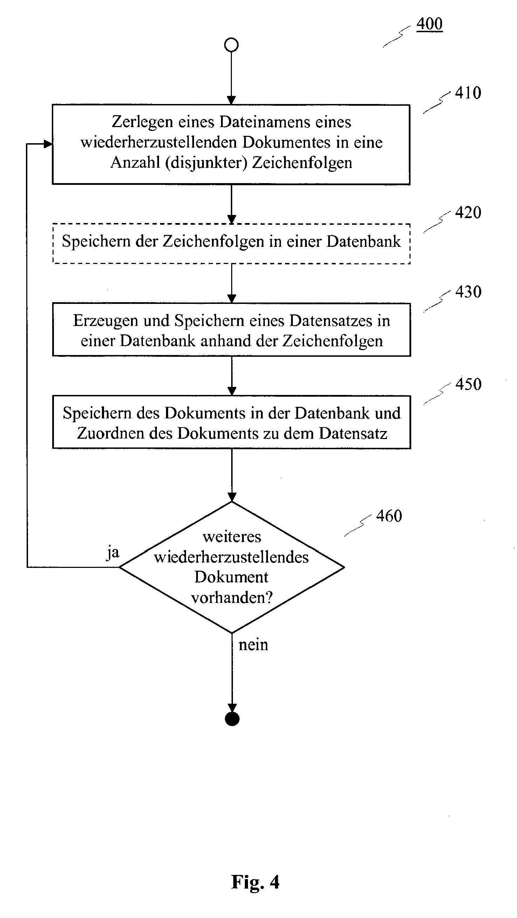

**Fig. 4** zeigt nun ein entsprechendes erfindungsgemäßes Verfahren, um ein in einer ersten Speichereinrichtung abgelegtes Dokument bzw. die dazugehörigen Metainformationen in einer zweiten Speichereinrichtung wiederherzustellen.

In einem ersten Schritt 410 wird der Dateiname des in der ersten Speichereinrichtung abgelegten elektronischen Dokuments in eine Anzahl von Zeichenfolgen zerlegt. Das Zerlegen des Dokumentnamens (bzw. des Dateinamens) kann hierbei automatisiert erfolgen, da die Zeichenfolgen jeweils Zeichen aus einer Zeichenmenge aufweisen oder die Länge der Zeichenfolge vorgegeben ist, wie oben beschrieben. Die so ermittelten Zeichenfolgen repräsentieren Metainformationen zu dem abgespeicherten elektronischen Dokument.

Die Zeichenfolgen werden in einem nachfolgenden Schritt 420 in der Datenbank 221 in der zweiten Speichereinrichtung 220 abgelegt.

In einem nächsten Schritt 430 wird anhand der ermittelten Zeichenfolgen aus dem Dateinamen in der Datenbank 221 ein Datensatz erzeugt und abgespeichert, welcher das elektronische Dokument repräsentiert. Ein Datensatz in der Datenbank 221 beschreibt also ein einzelnes elektronisches Dokument.

In einem nächsten Schritt 450 wird das elektronische Dokument ebenfalls in der Speichereinrichtung 220 abgelegt, wobei das elektronische Dokument direkt als BLOB in der Datenbank 221 gespeichert werden kann oder als Datei in einem Dateisystem. Das Übertragen des elektronischen Dokuments von der ersten Speichereinrichtung 210 in die zweite Speichereinrichtung 220 kann ebenfalls durch das Computersystem 100 veranlasst bzw. verwaltet werden. Alternativ kann auch ein weiteres Computersystem vorgesehen sein, welches die Datenübertragung zum Zwecke des Wiederherstellens von elektronischen Dokumenten in der Speichereinrichtung 220 verwaltet. Der Schritt 450 kann als optionaler Schritt ausgeführt werden.

In dem Schritt 450 wird auch eine Zuordnung des in der Speichereinrichtung 220 wieder hergestellten elektronischen Dokuments zu dem in der Datenbank 221 erzeugten und gespeicherten Datensatz erzeugt. Diese Zuordnung ist dann nicht notwendig, wenn lediglich das elektronische Dokument ohne die Metainformationen wieder hergestellt werden muss. In diesem Fall existiert bereits eine Zuordnung zu dem elektronischen Dokument, wobei lediglich das Dokument selbst fehlerhaft ist bzw. nicht mehr vorhanden ist.

In einem nächsten Schritt 460 wird geprüft, ob weitere wieder herzustellende Dokumente in der Speichereinrichtung 210 vorhanden sind. Ist dies der Fall, kehrt das Verfahren zu dem Schritt 410 zurück. Im anderen Fall wird der Ablauf des Verfahrens beendet.

Da zu jedem elektronischen Dokument in der zweiten Speichereinrichtung 220 auch ein entsprechendes elektronisches Dokument in der ersten Speichereinrichtung 210 abgelegt worden ist, kann die Überprüfung in dem Schritt 460 auch mit Hilfe des Datenbestands in der zweiten Speichereinrichtung 220 vorgenommen werden.

Der in Fig. 4 gezeigte Verfahrensablauf kann auch ad hoc ausgeführt werden, beispielsweise dann, wenn ein Zugriff auf ein elektronisches Dokument in der zweiten Speichereinrichtung 220 zu einem Fehler führt. Bei einem Zugriff auf ein fehlerhaftes bzw. nicht vorhandenes elektronisches Dokument in der zweiten Speichereinrichtung 220 kann das elektronische Dokument direkt aus dem elektronischen Dokument in der ersten Speichereinrichtung 210 wieder hergestellt werden und dem zugreifenden Benutzer bzw. dem zugreifenden Prozess zur Verfügung gestellt werden.

Das erfindungsgemäße Verfahren hat zudem den Vorteil, dass es auch geeignet ist, eine große Anzahl von Dokumenten zwischen verschiedenen Systemen auszutauschen, wobei die zugehörigen Metainformationen zu den Dokumenten bereits aus den Dateinamen abgeleitet werden können. Die austauschenden Systeme müssen sich hierzu lediglich auf die zu verwendenden Zeichenmengen oder über die Längen der einzelnen Zeichenfolgen einigen, um eine Herstellung von Dokumenten aus dem Dateinamen entsprechend der Herstellung der Dateinamen aus den Zeichenmengen zu ermöglichen.

Mehrere und/oder verschiedene Dokumenten-Management-Systeme oder Datenbanken können die erste Speichereinrichtung 210 verwenden, um dort elektronische Dokumente gemäß der Erfindung wiederherstellbar abzulegen.

Mit dem erfindungsgemäßen Verfahren sind nicht nur verloren gegangene Dokumente wiederherstellbar. Es kann auch aus den in der ersten Speichereinrichtung abgelegten elektronischen Dokumenten eine neue Datenbank mit Dokumenten in der zweiten Speichereinrichtung erstellt werden.

Die erste Speichereinrichtung kann auch ein tragbares Speichermedium sein, was einen Austausch von elektronischen Dokumenten zwischen verschiedenen Dokumenten-Management-Systemen erleichtert.

Die erfindungsgemäßen Verfahren können in Hardware, Firmware, Software oder als Kombination hiervon implementiert werden. Die erfindungsgemäßen Einrichtungen und Verfahren zum Speichern und/oder Wiederherstellen von elektronischen Dokumenten können als Computerprogrammprodukt in einer maschinenlesbaren Speichereinrichtung zur Ausführung durch einen programmierbaren Prozessor bereitgestellt werden. Die Schritte der erfindungsgemäßen Verfahren können von einem programmierbaren Prozessor ausgeführt werden, welcher ausgestaltet ist, eine Folge von Instruktionen auszuführen, um Eingabedaten gemäß der Erfindung zu verarbeiten und erfindungsgemäße Ausgabedaten bereitzustellen. Die Erfindung kann in einem oder mehreren Computer-Programmen implementiert werden, welche in einem Computer-System ausführbar sind. Das Computer-System umfasst zumindest einen programmierbaren Prozessor, welcher mit mindestens einer Speichereinrichtung gekoppelt ist, um Daten von der Speichereinrichtung zu empfangen und Daten an die Speichereinrichtung zu senden. Das Computer-System kann auch eine Eingabeeinrichtung und eine Ausgabeeinrichtung umfassen.

Die Computer-Programme können in einer Hochsprache, Assembler oder Maschinencode implementiert sein. Die Computer-Programme können mit prozeduralen, funktionalen, objekt-orientierten oder anderen für die Implementierung der Erfindung geeigneten Programmiersprachen implementiert werden. Für die Ausführung auf einem programmierbaren Prozessor kann der Programmcode kompiliert oder interpretiert werden. Der Programmcode kann vor Ausführung auch in einen Zwischencode übersetzt werden, wobei der Zwischencode durch den programmierbaren Prozessor interpretierbar und/oder ausführbar ist.

Ein Computer kann ein oder mehrere Massenspeichermedien zum Abspeichern der elektronischen Dokumente und zum Abspeichern der Datenbank umfassen. Als Massenspeichermedien können Festplatten, RAID-Systeme oder Netzwerkspeichersysteme (NAS oder SAN) verwendet werden. Die Massenspeichermedien können auch vorgesehen werden, den Programmcode zu speichern. Als Datenbanken zum Speichern der Metainformationen für die elektronischen Dokumente können relationale, objekt-orientierte, objekt-relationale oder hierarchische Datenbanken und Datenbank-Management-Systeme vorgesehen werden. Die Datenbank kann als verteiltes Datenbank-System ausgestaltet sein.

Zur Interaktion mit einem Benutzer kann die Erfindung auf einem Computer-System mit einer Anzeigeeinrichtung und einer Eingabeeinrichtung implementiert werden. Zur Entgegennahme von Dokumenten in Papierform und zur Übergabe entsprechender elektronischer Dokumente an den programmierbaren Prozessor zur weiteren Verarbeitung bzw. zur Erzeugung eines erfindungsgemäßen Dateinamens kann das Computer-System Leseeinrichtungen, etwa Scanner vorsehen.

## Patentansprüche

1. Computer-implementiertes Verfahren zum Herstellen oder Wiederherstellen von zu elektronischen Dokumenten gehörenden Metainformationen in einer Datenbank (221), in welcher Ausprägungen von Metainformationen von elektronischen Dokumenten speicherbar sind, aus einer Anzahl von elektronischen Dokumenten (10), welche jeweils mit einem Dateinamen (21) in einer ersten Speichereinrichtung (210) gespeichert sind,
wobei jeder Dateiname (21) aus einer Anzahl von Zeichenfolgen (22), die in einer vorbestimmten Reihenfolge zusammengefügt sind, gebildet ist, und wobei jede Zeichenfolge (22) eine Ausprägung einer vorbestimmten Metainformation des jeweiligen elektronischen Dokuments (10) umfasst,
wobei
- für jedes elektronische Dokument (10) aus dem Dateinamen (21) eine Anzahl von Zeichenfolgen (22) ermittelt wird, wobei die ermittelten Zeichenfolgen jeweils eine Ausprägung einer vorbestimmten Metainformation des jeweiligen elektronischen Dokuments (10) umfassen,
- in der Datenbank (221) für jedes elektronische Dokument (10) ein Datensatz erzeugt und gespeichert wird, wobei der gespeicherte Datensatz Attributswerte und/oder Referenzen zu Attributswerten aufweist, wobei die Attributswerte jeweils zumindest eine für das jeweilige elektronische Dokument (10) ermittelte Zeichenfolge (22) umfassen, und
- die Datenbank (221) in einer zweiten Speichereinrichtung (220) gespeichert wird.

2. Verfahren nach Anspruch 1, wobei die erste Speichereinrichtung (210) und die zweite Speichereinrichtung (220) zwei physikalisch voneinander getrennte Speichermedien sind.

3. Verfahren nach einem der Ansprüche 1 bis 2, wobei die erste Speichereinrichtung (210) ein Dateisystem (211) mit einer hierarchischen Ordnerstruktur (211) umfasst, in welcher die elektronischen Dokumente gespeichert sind, wobei für jedes elektronische Dokument (10) aus zumindest einem Ordnernamen der Ordnerstruktur (211) eine Anzahl von Zeichenfolgen (22) ermittelt wird, wobei zumindest eine Zeichenfolge der jeweils ermittelten Zeichenfolgen eine Ausprägung einer vorbestimmten Metainformation des jeweiligen elektronischen Dokuments (10) umfasst.

4. Verfahren nach einem der Ansprüche 1 bis 3, wobei jede Zeichenfolge (22) des jeweiligen Dateinamens und/oder des jeweiligen Ordnernamens Zeichen aus jeweils genau einer Zeichenmenge aufweist, welche jeweils aus einer Anzahl von zueinander disjunkten Zeichenmengen (40, 41, 42) ausgewählt ist, wobei jeweils zwei aufeinander folgende Zeichenfolgen (22) in dem Dateinamen und/oder in dem Ordnernamen Zeichen aus jeweils zwei der zueinander disjunkten Zeichenmengen aufweisen.

5. Verfahren nach einem der Ansprüche 1 bis 4, wobei jede Zeichenfolge (22) des jeweiligen Dateinamens und/oder des jeweiligen Ordnernamens jeweils eine vorbestimmte Anzahl von Zeichen aufweist.

6. Computerprogrammprodukt mit Programmcode, welcher, wenn in eine Datenverarbeitungsanlage geladen, das Verfahren gemäß einem der vorhergehenden Ansprüche zur Ausführung bringt.

## Claims

1. Computer-implemented method for producing or restoring metainformation belonging to electronic documents in a data base (221) in which characteristics of metainformation of electronic documents are storable, from a number of electronic documents (10) which are stored respectively with a file name (21) in a first storage device (210),
whereby each file name (21) is made of a number of character strings (22) that are joined in a predetermined order, and whereby each character string (22) comprises a characteristic of a predetermined piece of metainformation of the respective electronic document (10),
whereby
- for each electronic document (10) a number of character strings (22) is determined from the file name (21), whereby the determined character strings comprise respectively one characteristic of a predetermined piece of metainformation of the respective electronic document (10),
- a data set is produced and stored in the data base (221) for each electronic document (10), whereby the stored data set has attribute values and/or references to attribute values, whereby the attribute values comprise respectively at least one character string (22) determined for the respective electronic document (10) and
- the data base (221) is stored in a second storage device (220).

2. Method according to claim 1, whereby the first storage device (210) and the second storage device (220) are two storage media physically separated from each other.

3. Method according to one of the claims 1 to 2, whereby the first storage device (210) comprises a file system (211) with a hierarchical folder structure (211) in which the electronic documents are stored, whereby a number of character strings (22) is determined for each electronic document (10) from at least one folder name of the folder structure (211), whereby at least one character string of the character strings respectively determined comprises a characteristic of a predetermined piece of metainformation of the respective electronic document (10).

4. Method according to one of the claims 1 to 3, whereby each character string (22) of the respective file name and/or of the respective folder name has characters from respectively exactly one character set which is selected respectively from a number of mutually disjoint character sets (40, 41, 42), whereby respectively two successive character strings (22) have characters from respectively two mutually disjoint character sets in the file name and/or in the folder name.

5. Method according to one of the claims 1 to 4, whereby each character string (22) of the respective file name and/or of the respective folder name has respectively a predetermined number of characters.

6. Computer program product with program code that executes the method according to one of the preceding claims when it is loaded in a data processing equipment.

## Revendications

1. Procédé mis en oeuvre par ordinateur pour établir ou rétablir des métainformations appartenant à des documents électroniques dans une banque de données (221), dans laquelle des caractéristiques de métainformations de documents électroniques peuvent être stockées, à partir d'un nombre de documents électroniques (10) qui sont stockés respectivement avec un nom de fichier (21) dans un premier dispositif de stockage (210),
chaque nom de fichier (21) étant formé à partir d'un nombre de séquences de caractères (22) qui sont assemblées dans un ordre prédéterminé et chaque séquence de caractères (22) comprenant une forme caractéristique d'une métainformation prédéterminée du document électronique respectif (10), dans lequel
- pour chaque document électronique (10) un nombre de séquences de caractères (22) est déterminé à partir du nom de fichier (21), les séquences de caractères déterminées comprenant respectivement une caractéristique d'une métainformation prédéterminée du document électronique respectif (10),
- un ensemble de données étant produit et stocké dans la banque de données (221) pour chaque document électronique (10), l'ensemble de données stockées présentant des valeurs d'attribut et/ou des références à des valeurs d'attribut, les valeurs d'attribut comprenant respectivement au moins une séquence de caractères (22) déterminée pour le document électronique respectif (10) et
- la banque de données (221) étant stockée dans un second dispositif de stockage (220).

2. Procédé selon la revendication 1, le premier dispositif de stockage (210) et le second dispositif de stockage (220) étant deux supports de stockage séparés physiquement l'un de l'autre.

3. Procédé selon l'une des revendications 1 à 2, dans lequel le premier dispositif de stockage (210) comprend un système de données (211) avec une structure de dossier hiérarchique (211) dans laquelle les documents électroniques sont stockés, dans lequel un nombre de séquences de caractères (22) est déterminé pour chaque document électronique (10) à partir d'au moins un nom de dossier de la structure de dossier (211), cependant qu'au moins une séquence de caractères des séquences de caractères respectivement déterminées comprend une caractéristique d'une métainformation prédéterminée du document électronique respectif (10).

4. Procédé selon l'une des revendications 1 à 3, dans lequel chaque séquence de caractères (22) du nom de fichier respectif et/ou du nom de dossier respectif présente des caractères à partir de respectivement exactement un jeu de caractères qui est sélectionné respectivement à partir d'un nombre de jeux de caractères mutuellement disjoints (40, 41, 42), cependant que respectivement deux séquences de caractères consécutives (22) présentent des caractères de jeux de caractères mutuellement disjoints dans le nom de fichier et/ou dans le nom de dossier.

5. Procédé selon l'une des revendications 1 à 4, dans lequel chaque séquence de caractères (22) du nom de fichier respectif et/ou du nom de dossier respectif présente respectivement un nombre prédéterminé de caractères.

6. Produit programme informatique avec code de programme qui, lorsqu'il est chargé dans une installation de traitement des données, mène à l'exécution du procédé selon l'une des revendications précédentes.
